# EUROPEAN PATENT SPECIFICATION

(11) **EP 1 548 950 B1**
(45) Date of publication and mention of the grant of the patent: **08.11.2006**
(21) Application number: 04029116.3
(22) Date of filing: 08.12.2004
(51) Int. Cl.: H04B 1/16

(54) **Noise removal device**
Vorrichtung zum Entfernen von Störungen
Dispositif pour pour la suppression de bruit

(30) Priority: 26.12.2003 JP 2003433994
(43) Date of publication of application: 29.06.2005
(73) Proprietor: Pioneer Corporation, Meguro-ku, Tokyo (JP)
(72) Inventor: Suganuma, Hisashi c/o Kawagoe Koujou, Kawagoe-shi Saitama-ken 350-8555 (JP)
(74) Representative: Bohnenberger, Johannes

(56) References cited:
- EP-A2- 0 477 460
- US-A- 4 306 112
- US-A- 4 419 541
- PATENT ABSTRACTS OF JAPAN vol. 018, no. 390 (E-1582), 21 July 1994 (1994-07-21) & JP 06 112853 A (SANYO ELECTRIC CO LTD), 22 April 1994 (1994-04-22)

## Description

### BACKGROUND OF THE INVENTION

The present invention relates to a noise removal device for removing a noise mixed in a signal to be processed within a receiver.

Generally, it is technically important to perform a signal processing in a receiver in accordance with a received signal free from noise.

As a specific example, a car radio receiver mounted in a car is equipped with a noise removal device for removing an ignition noise mixed in a received signal (for example, IF signal or the like), and performing a signal processing in accordance with the received signal free from the ignition noise (for example, refer to Japanese Unexamined Patent Application Publication No. Hei 06-112853).

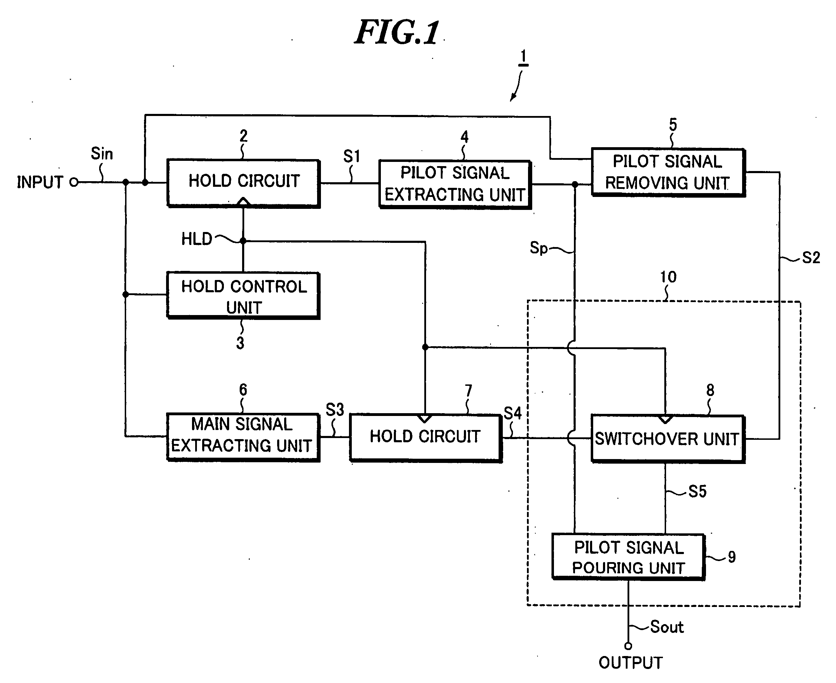

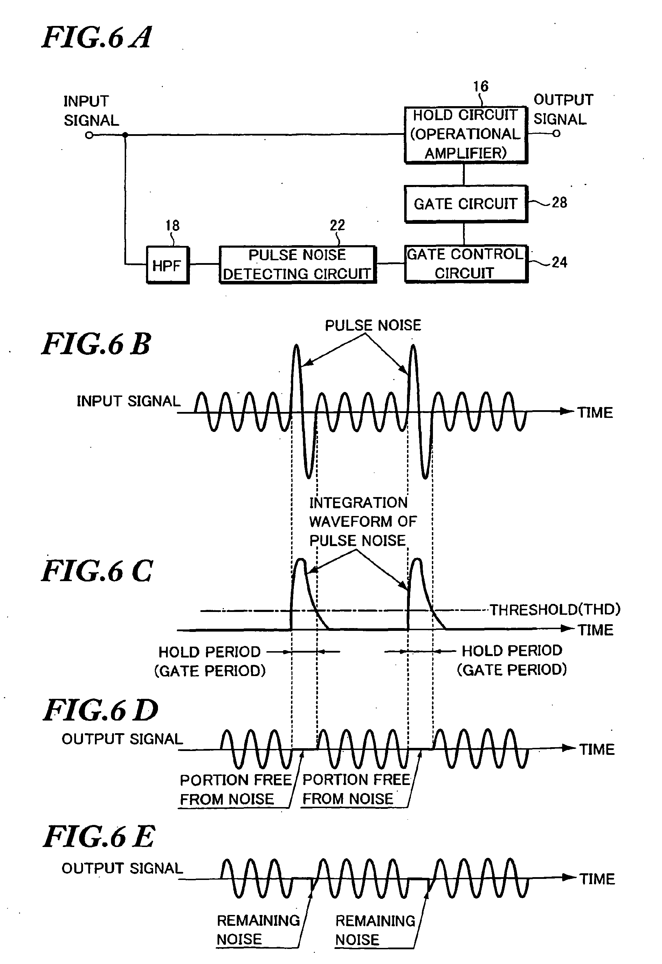

Fig. 6A is a block diagram schematically showing an arrangement of a conventional noise removal device illustrated in Fig.1 of the above-mentioned patent publication.

As shown in Fig. 6A, the conventional noise removal device (noise canceller) comprises a high pass filter 18, a pulse noise detecting circuit 22, a gate controlling circuit 24, a gate circuit 28, and a hold circuit 16 consisting of an operational amplifier.

As shown in Fig. 6B, once an IF signal containing a white noise and a pulse noise such as an ignition noise is inputted as an input signal, the high pass filter 18 extracts a high frequency noise component from the input signal, and further, the pulse noise detecting circuit 22 performs a gain control on the input signal in accordance with the high frequency noise component thus obtained.

Next, by integrating, with a specific time constant, the pulse noise contained in the input signal outputted from the noise detecting circuit 22, the gate controlling circuit 24 generates a signal having an integration waveform as shown in Fig. 6C, and detects, as hold periods (gate periods), periods of the integration waveform signal having a larger amplitude than a predetermined threshold value THD.

Then, the gate circuit 28, upon receiving an instruction from the gate controlling circuit 24 notifying that the foregoing periods are hold periods (gate periods), forbids an input signal from being inputted into the hold circuit 16. On the other hand, when the foregoing periods are not hold periods (at the time of not generating a gate controlling signal), the gate circuit 28 allows an input signal to be inputted into the hold circuit 16, thereby allowing the hold circuit 16 to output an output signal (IF signal) free from the pulse noise generated during the hold periods, as shown in Fig. 6D.

However, with regard to the above-described conventional noise removal device, once a reception condition of a receiver is worsened and this has increased a noise component in a received signal, the amplitude of the integration waveform signal shown in Fig. 6C will vary with respect to the threshold value THD. Namely, the threshold value THD is a fixed value, and since the amplitude of an integration waveform signal changes once the noise component increases, there will be a change in a comparison point of the threshold value THD with respect to the integration waveform signal, thereby causing a change in the period (hold period) of the integration waveform signal having an amplitude larger than the threshold value THD. For this reason, an original signal component (which should be held) of an IF signal fails to be held, what is held is only an increased noise component, whereby bringing about a problem that the noise component thus held is notched in its waveform and will be mixed into an output signal, as shown in Fig. 6E.

### SUMMARY OF THE INVENTION

The present invention has been accomplished in order to solve the aforementioned conventional problem, and it is an object of the present invention to provide an improved noise removal device capable of improving a noise removal precision.

According to one aspect of the present invention, there is provided a noise removal device for removing a pulse noise mixed in a received signal, said device comprising: hold control means for detecting occurring periods of the pulse noise mixed in the received signal, and deciding hold periods corresponding to the pulse noise occurring periods; pilot signal extracting means for extracting and outputting a pilot signal contained in the received signal; pilot signal removing means for removing the pilot signal contained in the received signal and outputting a signal free from the pilot signal; main signal extracting means for extracting and outputting a main signal contained in the received signal; hold means for holding, during the hold periods, a signal containing the main signal outputted from the main signal extracting means and outputting this signal; and signal combining means for combining the pilot signal extracted by the pilot signal extracting means, with a signal outputted from the hold means during the hold periods, and with another signal outputted from the pilot signal removing means during periods other than hold periods, thereby producing an output signal.

According to another aspect of the present invention, the noise removal device further comprises another hold means for holding the received signal during the hold periods so as to output a signal free from the pulse noise. In particular, the pilot signal extracting means extracts the pilot signal contained in a signal outputted from said another hold means and free from the pulse noise, thereby extracting the pilot signal contained in the received signal.

### BRIEF DESCRIPTION OF THE DRAWINGS

These and other objects and advantages of the present invention will become clear from the following description with reference to the accompanying drawings, wherein:
Fig. 1 is a block diagram showing the constitution of a noise removal device formed according to an embodiment of the present invention;
Figs. 2A and 2B are charts explaining the characteristics of the noise removal device of Fig. 1;
Fig. 3 is a block diagram showing the constitution of another noise removal device formed according to another embodiment of the present invention;
Figs. 4A to 4E are charts explaining an operation of the noise removal device of Fig. 3;
Figs. 5A to 5D are waveform charts explaining an operation of the noise removal device of Fig. 3;
Fig. 6A is a block diagram showing the constitution of a conventional noise removal device; and
Figs. 6B to 6E are waveform charts explaining an operation of the conventional noise removal device.

### DETAILED DESCRIPTION OF THE PREFERRED EMBODIMENTS

In the following, description will be given to explain a noise removal device for use in a vehicle radio receiver, serving as a preferred embodiment of the present invention. Fig. 1 is a block diagram showing an arrangement of the noise removal device formed according to the present embodiment.

As shown in Fig.1, the noise removal device 1 receives, as an input signal Sin, a reception signal generated within a radio receiver. In more detail, the noise removal device 1 receives, as an input signal Sin, a detection signal (a composite signal) detected by a detector (not shown). Once a pulse-like noise (hereinafter, referred to as "pulse noise") such as a thunderbolt noise and an ignition noise mixes into the detection signal, such a pulse noise will be removed from the input signal Sin, thereby outputting, as an output signal Sout, a detection signal not containing any pulse noise.

Actually, the noise removal device 1 comprises a hold circuit 2 into which the input signal Sin is inputted, a hold controlling unit 3, a pilot signal removing unit 5, a main signal extracting unit 6, a pilot signal extracting unit 4, a hold circuit 7, and a signal synthesizing unit 10. Further, the signal combining unit 10 includes a switchover unit 8 and a pilot signal adding unit 9 outputting as an output signal Sout a detection signal free from any pulse noise.

The hold circuit 2 holds an input signal Sin during a hold period τ specified by a hold signal HLD (which will be described later), and outputs a hold-processed signal S1 (hereinafter referred to as "first detection signal").

The hold controlling unit 3 extracts, from the input signal Sin, a noise (hereinafter, referred to as "high frequency noise") having a frequency higher than the frequency of the detection signal, and generates a smoothened signal indicating an amount of the high frequency noise by smoothing the high frequency noise. Then, the amplitude of the smoothened signal is compared with that of the input signal Sin so as to detect a pulse noise having an amplitude higher than that of the smoothened signal contained in the input signal Sin. Further, a period during which a detected pulse noise has an amplitude higher than that of the smoothened signal is used as a pulse noise occurrence period, thereby generating and outputting the hold signal HLD having the occurrence period as the hold period τ.

Therefore, the hold circuit 2 holds the input signal Sin in the hold period τ indicated by the hold signal HLD, thereby outputting a first detection signal S1 free from pulse noise.

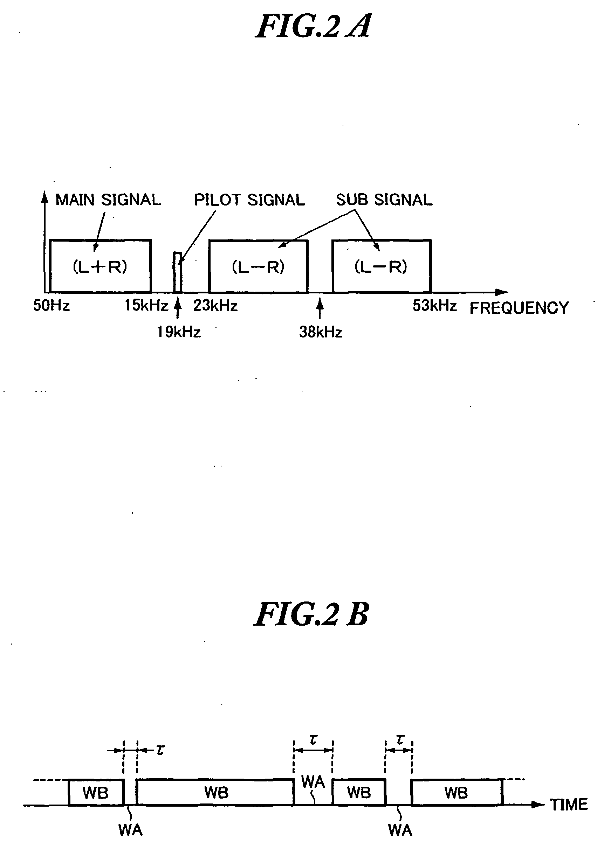

Here, if the above-mentioned receiver is a receiver for receiving a stereo broadcasting, a situation will be like that shown in Fig. 2A. Namely, since a detection signal outputted from a detector contains a pilot signal having a frequency of 19 kHz specified by the Broadcasting Technique and is in a frequency band from 50 Hz to 53 kHz, the hold controlling unit 3 extracts as a high frequency noise a high frequency noise component having a frequency higher than 53 kHz and contained in the input signal Sin, thereby generating the above-mentioned smoothened signal in accordance with the extracted high frequency noise.

The pilot signal extracting unit 4 extracts and outputs a pilot signal Sp having a frequency of 19 kHz and contained in the first detection signal S1.

The pilot signal removing unit 5 operates to remove a pilot signal contained in the input signal Sin in synchronism with the above-mentioned pilot signal Sp, thereby outputting a signal (hereinafter, referred to as "second detection signal") S2 free from any pilot signal.

The main signal extracting unit 6 comprises a group of filters including a band pass filter having a cutoff frequency of 15 kHz and a band elimination filter for more exactly removing a pilot signal having a frequency of 19 kHz. In fact, the main signal extracting unit 6 allows the passing of a main signal {(L+R) signal} having a frequency of 15 kHz or lower and contained in the input signal Sin (here, the main signal is among the detection signals shown in Fig. 2A). And, by removing as a high frequency noise a pilot signal having a frequency of 19 kHz and a high frequency component having a frequency higher than 15 kHz, a third detection signal S3 is thus outputted which has a greatly reduced noise level and has the main signal as its main component.

During hold periods τ specified by a hold signal HLD, the hold circuit 7 holds the third detection signal S3 and outputs the same as a fourth detection signal S4.

The switchover unit 8 is composed of a two-input one-output type analog multiplexer which receives the second detection signal S2 and the fourth detection signal S4, and outputs one of the signal S2 and the signal S4 as a fifth detection signal S5 in accordance with the hold signal HLD. Then, during hold periods τ, the fourth detection signal S4 from the hold circuit 7 is outputted as a fifth detection signal S5. On the other hand, during other periods than the hold periods τ, the second detection signal S2 from the pilot signal removing unit 5 is outputted as a fifth detection signal S5.

The pilot signal adding unit 9 synthesizes the fifth detection signal S5 with the pilot signal Sp so as to generate (reproduce) a detection signal free from any pulse noise and output the same as an output signal Sout.

Next, description will be given to explain a series of operations of the noise removal device 1 having the above-described constitution.

For example, when the receiver is in its worsened reception condition, once the receiver outputs a detection signal containing a lot of noise and a pulse noise such as an ignition noise, such detection signal will be inputted as the input signal Sin into the noise removal receiver.

Then, the hold controlling unit 3 generates a smoothened signal in accordance with a high frequency noise contained in the input signal Sin, and detects a period of generating a pulse noise having an amplitude higher than that of the smoothened signal, thus outputting a hold signal HLD with the pulse noise generation periods serving as hold periods τ. In this way, the hold circuit 2 holds the input signal Sin during hold periods τ and thus maintains a detection signal component existing right before the occurrence of a pulse noise, thereby outputting a first detection signal S1 free from any pulse noise.

Furthermore, while the pilot signal extracting unit 4 extracts a pilot signal Sp having a frequency of 19 kHz from the first detection signal S1 and outputs the same, the pilot signal removing unit 5 removes the pilot signal from the input signal Sin in accordance with the pilot signal Sp, thereby supplying a second signal S2 not containing any pilot signal to the switchover unit 8.

On the other hand, the main signal extracting unit 6 and the hold circuit 7 operate in parallel with the operations of the hold circuit 2, the pilot signal extracting unit 4, and the pilot signal removing unit 5.

At first, the main signal extracting unit 6 forbids the passing of a high frequency noise having a frequency of 15 kHz or higher and a pilot signal having a frequency of 19 kHz (all contained in the input signal Sin), thereby outputting a third detection signal S3 containing a main signal having a frequency of 15 kHz or lower.

Next, the hold circuit 7 holds the third detection signal S3 during hold periods τ in accordance with the hold signal HLD, thereby removing a pulse noise from the third detection signal S3, and outputting a fourth detection signal S4 not containing any pulse signal to the switchover unit 8.

Namely, if a pulse noise mixed in the input signal Sin contains a noise component having a frequency of 15 kHz or lower, the noise component having a frequency of 15 kHz or lower will also be mixed in the third detection signal S3 outputted from the main signal extracting unit 6 and maintained there. Accordingly, during the hold periods τ the hold circuit 7 holds the third detection signal S3, thereby removing a noise component having a frequency of 15 kHz or lower, thus outputting a fourth detection signal S4 not containing any pulse noise.

Next, the switchover circuit 8, upon being provided with hold periods τ by a hold signal HLD, operates to output the fourth detection signal S4 to the pilot signal adding unit 9 during the hold periods τ, but outputs the second detection signal S2 to the pilot signal pouring unit 9 in periods other than the hold periods τ.

Therefore, as shown in a time chart schematically indicated in Fig. 2B, during the hold periods τ first portions WA (free from any pulse noise) of the fourth detection signal S4 are outputted from the switchover unit 8, and during other periods than the hold periods τ second portions WB (corresponding to other periods than the hold periods τ) of the second detection signal S2 are outputted from the switchover unit 8, thereby forming a fifth detection signal S5 in which the first and second portions WA and WB are arranged continuously in time is supplied to the pilot signal adding unit 9.

Furthermore, even if a pulse noise has been mixed into the second detection signal S2, since the switchover unit 8 outputs the first portions WA (namely, first portions WA free from any pulse noise) of the fourth detection signal S4 during hold periods τ, it is possible for the fifth detection signal S5 free from any pulse noise to be supplied to the pilot signal adding unit 9.

Next, the pilot signal adding unit 9 synthesizes the fifth signal S5 with the pilot signal Sp so as to generate a detection signal containing the pilot signal having a frequency of 19 kHz and output the same as an output signal Sout.

As described above, according to the noise removal device 1 of the present embodiment, during hold periods τ in which a pulse noise has occurred, the fourth detection signal S4 free from any pulse noise is supplied through the switchover unit 8 to the pilot signal adding unit 9, while during any of other periods (in which a pulse noise has not occurred) than the hold periods τ, the second detection signal S2 is supplied through the switchover unit 8 to the pilot signal pouring unit 9. Accordingly, the pilot signal adding unit 9 synthesizes the fifth detection signal S5 with the pilot signal Sp, thereby generating an output signal (detection signal) free from any pulse signal and outputting the same.

Furthermore, when the main signal extracting circuit 6 extracts a main signal from an input signal Sin, since a high frequency noise having a frequency of 15 kHz or higher is removed, the hold circuit 7 will hold the third detection signal S3 not containing any high frequency noise during hold periods τ. Consequently, since the hold circuit 7 will exactly hold a main signal contained in the third detection signal S3 rather than a noise component as in prior art, there would be no noise component to be mixed into the first portions WA shown in Fig. 2B. As a result, it is possible for the fourth signal S4 having a reduced noise amount or free from any pulse noise to be supplied to the switchover unit 8, and further, for a detection signal having a reduced noise amount or free from any pulse noise to be outputted as an output signal Sout from the pilot signal adding unit 9.

In this way, the noise removal device 1 of the present embodiment is constructed such that it removes pulse noise, and does not hold noise component when the hold circuit 7 removes a pulse noise. Therefore, it is possible to improve the precision of the noise removal processing.

In addition, the noise removal device 1 shown in Fig.1 is constructed such that the pilot signal extracting unit 4 extracts a pilot signal contained in the first detection signal S1 outputted from the hold circuit 2, thereby outputting the pilot signal Sp. However, the present invention should not be limited to such an arrangement. In fact, it is also possible to form another arrangement in which the pilot signal extracting unit 4 extracts a pilot signal contained in the input signal Sin, and outputs the same as the above-mentioned pilot signal Sp. By virtue of such an arrangement, it is allowed to dispense with the hold circuit 2, thereby realizing a noise removal device 1 having a simplified structure.

Although the above description is based on a noise removal device to be provided in a vehicle radio receiver, the noise removal device of the present embodiment can also be used in a portable radio receiver, a desktop radio receiver for an indoor use, and other types of radio receivers.

Moreover, the noise removal device of the present embodiment can remove not only a pulse noise such as an ignition noise generated from a car and a thunderbolt noise, but also another kind of pulse noise such as an electromagnetic noise generated from the driving motor of a train.

### [Example]

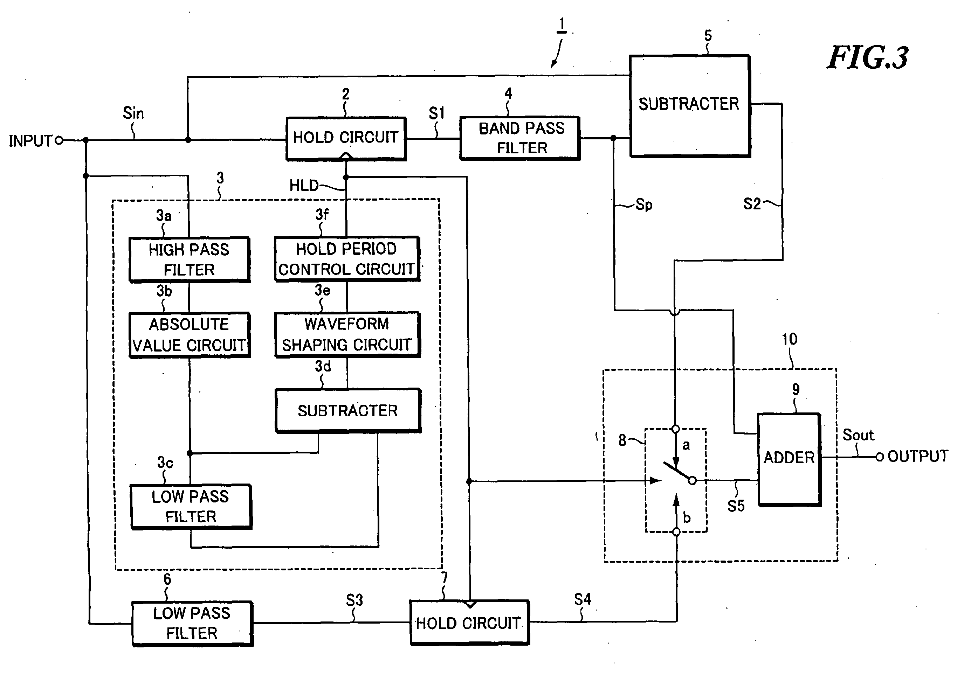

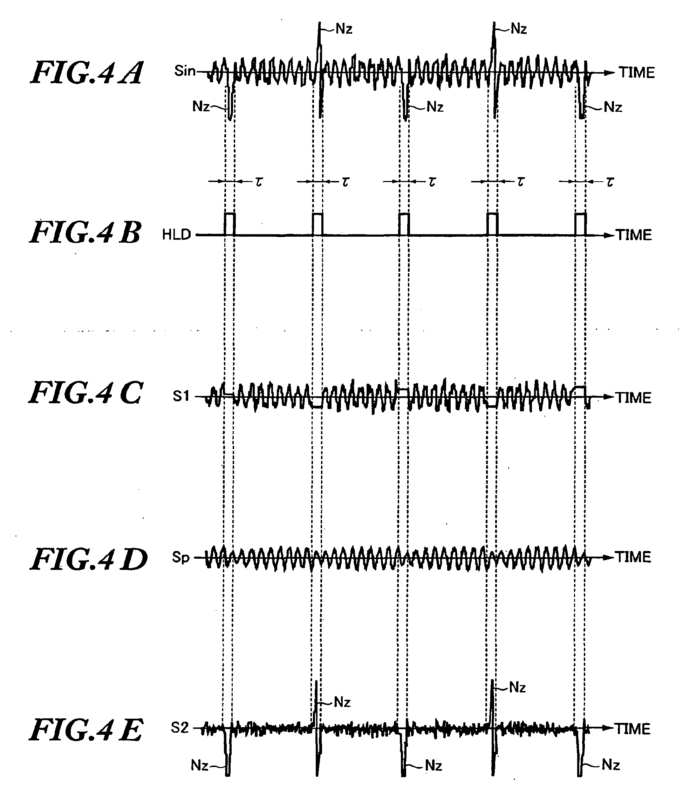

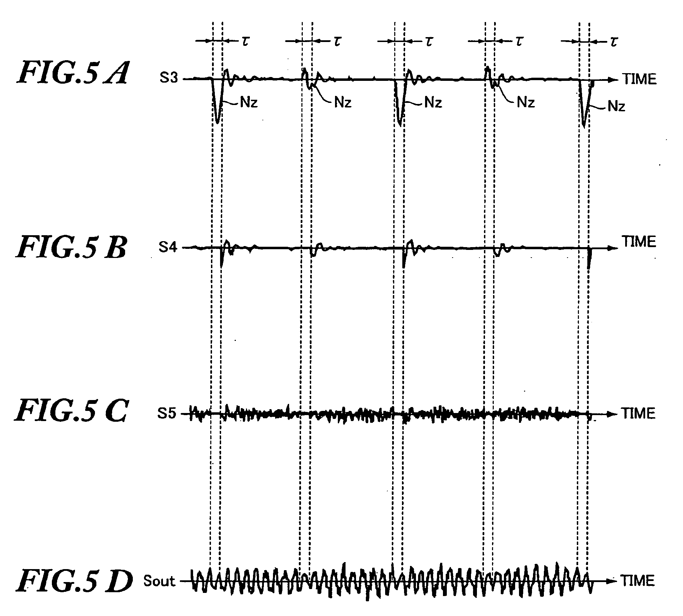

Next, examples of the noise removal device of the present embodiment will be described in detail with reference to Figs. 3 to 5. Fig. 3 is a block diagram showing the constitution of the noise removal device of the present embodiment, Figs. 4 and 5 are waveform graphs showing the waveforms of various signals generated within the present noise removal device. However, in Fig. 3, elements which are the same as or corresponding to those in Fig. 1 are represented by the same reference numerals. Further, Figs. 4 and 5 show waveforms obtained by tracing the waveforms displayed on the screen of an oscilloscope.

The noise removal device 1 shown in Fig. 3 differs from the noise removal device 1 shown in Fig.1 in that the hold control unit 3 which receives an input signal Sin supplied from a wave detector comprises a high pass filter 3a, an absolute value circuit 3b, a low pass filter 3c, a subtracter 3d, a waveform shaping circuit 3e, and a hold period control unit 3f.

When the receiver is used as a receiver which receives a stereophonic broadcasting, the high pass filter 3a is set such that its cut off frequency is at about 53 kHz, thereby allowing a high frequency noise having a frequency higher than 53 kHz to pass therethrough and be supplied to the absolute value circuit 3b.

The absolute value circuit 3b operates to convert a negative polarity component of a high frequency noise into a positive polarity component, thereby producing only positive polarity high frequency noise which is then supplied to the low pass filter 3c and the subtracter 3d.

The low pass filter 3c operates to smoothen the positive polarity high frequency noise so as to produce a smoothened signal which is then supplied to the subtracter 3d.

The subtracter 3d operates to perform a subtraction between the smoothened signal and the positive polarity high frequency noise supplied from the absolute value circuit 3b, so as to obtain a noise component having a higher frequency than that of the smoothened signal from the positive polarity high frequency noise and supply the same as a differential signal to the waveform shaping circuit 3e.

The waveform shaping circuit 3e operates to shape the waveform of the differential signal so as to produce a square waveform binary signal and supply the same to the hold period control circuit 3f.

The hold period control circuit 3f comprises a digital low pass filter circuit or the like for generating a square wave having a time width corresponding to an occurring period of an experimentally analyzed pulse noise such as a thunderbolt noise and an ignition noise generated by a car. In this way, the hold period control circuit 3f can perform a low-pass filtering on the above-mentioned binary signal, so as to generate and output a hold signal HLD which becomes logic "H" during a period approximating to a pulse noise occurring period. Namely, the hold period control circuit 3f outputs a hold signal HLD with its logical "H" period serving as a hold period τ.

The band pass filter 4 serves as an equivalent to the pilot signal extracting unit 4 shown in Fig. 1, and is formed by a narrow band pass filter having its central frequency at 19 kHz, so that it can extract and output a pilot signal Sp contained in the first detection signal S1 supplied from the hold circuit 2.

The subtracter 5 serves as an equivalent to the pilot signal removing unit 5 shown in Fig. 1, and operates to subtract a pilot signal Sp from an input signal Sin, thereby outputting a second detection signal S2 free from pilot signal.

The low pass filter 6 serves as an equivalent to the main signal extracting unit 6 shown in Fig. 1, and is formed by a low pass filter having its cut-off frequency at 15 kHz.

The low pass filter 6 allows the passing of a main signal {(R+L) signal} having a frequency of 15 kHz or lower and contained in the input signal Sin, but forbids the passing of high frequency noises having a frequency of 15 kHz or higher, thereby outputting a third detection signal S3 containing the main signal as its main component.

The switchover unit 8 shown in Fig. 1 is in fact formed by a two-output one-input type analog multiplexer circuit 8 which performs a switchover in accordance with a hold signal HLD, as schematically shown in Fig. 3, with one input contact a thereof being connected to an output terminal of the subtracter 5, and the other input contact b being connected to an output terminal of the hold circuit 7.

Actually, the analog multiplexer circuit 8 is such that during periods other than hold periods τ the input contact a is switched ON so that the second detection signal S2 is outputted as the fifth detection signal S5 to an adder 9. On the other hand, once there is a hold signal HLD supplied from the hold period control circuit 3f and thus hold periods τ are specified, the input contact b is switched ON during the hold periods τ so that the fourth detection signal S4 is outputted as the fifth detection signal S5 to the adder 9.

Here, the adder 9 servers as an equivalent to the pilot signal adding unit 9 shown in Fig. 1, and operates to add together the pilot signal Sp supplied from the band pass filter 4 and the fifth detection signal S5, so as to generate (reproduce) a detection signal containing the pilot signal, thereby outputting the detection signal as an output signal Sout.

In fact, the analog multiplexer circuit 8 and the adder 9 together form the signal synthesizing unit 10 shown in Fig. 1.

Next, description will be given to explain an operation of the noise removal device 1 having the foregoing constitution, with reference to Figs. 4 and 5.

However, in order to explain the feature of the noise removal device 1 in a more understandable way, the following description is based on an example wherein the detector outputs a detection signal detected in accordance with an arrived broadcasting electric wave in which only pilot signals have been modulated, and wherein a pulse noise Nz such as an ignition noise is mixed into a detection signal near an actual sensitivity at which noise components will be increased.

Fig. 4A shows a waveform obtained when a detection signal (input signal) Sin, into which a pulse noise Nz was mixed near an actual sensitivity, has been inputted.

In operation, once an input signal Sin is inputted, the hold control circuit 3f outputs a square wave hold signal HLD shown in Fig. 4B during the occurring periods of the pulse noise Nz. Then, the hold circuit 2 operates to hold the input signal Sin during the holdperiods τ specified by the hold signal HLD, thereby outputting the first detection signal free from pulse noise Nz (as shown in Fig. 4C). Subsequently, the band pass filter 4 extracts the pilot signal Sp having a frequency of 19 kHz from the first detection signal S1, thereby outputting a pilot signal shown in Fig. 4D.

Furthermore, the subtracter 5 performs a subtraction between the input signal Sin shown in Fig. 4A and the pilot signal Sp shown in Fig. 4D, thereby outputting a second detection signal S2 shown in Fig. 4E.

On the other hand, the low pass filter 6 operates to remove a high frequency noise having a frequency of 15 kHz or higher and a pilot signal from an input signal Sin, thereby supplying a third detection signal S3 shown in Fig. 5A to the hold circuit 7. Here, once a pulse noise Nz containing a noise component having a frequency of 15 kHz or lower is mixed into a detection signal, a third detection signal S3 will become a signal containing an integration waveform pulse noise Nz and is then supplied to the hold circuit 7.

Next, the hold circuit 7 holds the third detection signal S3 in accordance with the hold signal HLD so as to hold in the hold periods τ a signal component existing immediately before the occurrence of the integration waveform pulse noise Nz, thereby outputting a fourth detection signal S4 free from any pulse noise (as shown in Fig. 5B).

Here, as can be understood in Fig. 5B, during each hold period τ the fourth detection signal S4 substantially not containing any noise component is outputted from the hold circuit 7.

Although the waveform shown in Fig. 5B is based on an assumption that a detection signal not containing a main signal is inputted as an input signal Sin, in case a detection signal actually containing a main signal has been inputted as an input signal Sin, the main signal contained in the third detection signal outputted from the low pass filter 6 will be exactly held during the hold periods τ, thereby outputting a fourth detection signal S4 not containing any noise component.

In this way, by passing an input signal Sin containing a main signal through the low pass filter 6 and holding the same in the hold circuit 7, it is possible to generate a fourth detection signal S4 not containing any noise component during the hold periods τ.

Next, the analog multiplexer 8, upon being provided with hold periods τ by the hold signal HLD, will output a fourth detection signal S4 to the adder 9 during the hold periods τ, but will output a second detection signal S2 to the adder 9 during other periods than the hold periods τ.

Then, the adder 9 operates to add together a fifth detection signal S5 and a pilot signal Sp so as to generate (reproduce) a detection signal containing a pilot signal having a frequency of 19 kHz and output the same as an output signal Sout.

As described above, according to the noise removal device 1 of the present embodiment, during each hold period τ in which a pulse noise Nz occurs, the fourth detection signal S4 free from any pulse noise is supplied to the adder 9 through the analog multiplexer 8. On the other hand, during other periods than the hold periods τ, the second detection signal is supplied to the adder 9 through the analog multiplexer 8. In this way, the adder 9 can add together a fifth detection signal S5 and a pilot signal, thereby generating and then outputting an output signal (detection signal) free from any pulse noise.

Furthermore, the low pass filter 6 operates to remove in advance a high frequency noise from an input signal Sin. As to the third detection signal S3 having a reduced noise amount, the hold circuit 7 performs a hold processing during hold periods τ for removing pulse noise.

For this reason, once the hold circuit 7 performs the above-mentioned hold processing, it will exactly hold amain signal, but will not hold any noise components, thereby producing a fourth detection signal S4 having a reduced noise amount.

As a result, it is possible to supply the fourth detection signal S4 free from any pulse noise or having only a reduced noise amount to the analog multiplexer 8. Further, it is possible for the adder 9 to output, as an output signal Sout, a detection signal free from any pulse noise or having only a reduced noise amount.

Moreover, with the noise removal device 1 of the present embodiment, since the above-described low pass filter 6 has a cutoff frequency of 15 kHz, the low pass filter 6 can output a third detection signal S3 containing a main signal {(R+L) signal} capable of reproducing a monophonic sound signal shown in Fig. 2A.

For this reason, during periods other than the hold periods τ, (R+L) signal and (R-L) signal contained in the second detection signal S2 and capable of reproducing a stereo sound signal are supplied to the adder 9 through the analog multiplexer 8. On the other hand, during hold periods τ, (R+L) signal contained in the second detection signal S2 is supplied to an adder 9 through the analog multiplexer 8.

Therefore, a detection signal in which a main signal for effecting a monophonic reproduction and main/sub signals for effecting a stereo reproduction occur alternatively and continuously in time, is outputted as an output signal Sout.

However, since (R+L) signal for effecting a monophonic reproduction is generated within an output signal Sout during extremely short hold periods, even if a matrix circuit (not shown) performs a stereo reproduction in accordance with the output signal Sout, it is still possible to reproduce a stereo sound signal without bringing about any influence to an acoustic sense.

Moreover, by setting the cutoff frequency of the low pass filter 6 at 15 kHz, it is possible to greatly remove a high frequency noise mixed in the third detection signal S3. Therefore, once the hold circuit 7 performs the above-mentioned hold processing, main signal will exactly be held up.

Consequently, it is possible to supply the fourth detection signal S4 free from any pulse noise or having only a reduced noise amount to the analog multiplexer 8. Further, it is possible for the adder 9 to output, as an output signal Sout, a detection signal free from any pulse noise or having only a reduced noise amount.

## Claims

1. A noise removal device (1) for removing a pulse noise mixed in a received signal, said device comprising:
hold control means (3) for detecting occurring periods of the pulse noise mixed in the received signal, and deciding hold periods corresponding to the pulse noise occurring periods;
pilot signal extracting means (4) for extracting and outputting a pilot signal contained in the received signal;
pilot signal removing means (5) for removing the pilot signal contained in the received signal and outputting a signal free from the pilot signal;
main signal extracting means (6) for extracting and outputting a main signal contained in the received signal;
hold means (7) for holding, during the hold periods, a signal containing the main signal outputted from the main signal extracting means (6) and outputting said signal; and
signal combining means (10) for combining the pilot signal extracted by the pilot signal extracting means (4), with a signal outputted from the hold means during the hold periods, and with another signal outputted from the pilot signal removing means (5) during periods other than hold periods, thereby producing an output signal.

2. The noise removal device according to claim 1, further comprising another hold means (2) for holding the received signal during the hold periods so as to output a signal free from the pulse noise,
wherein the pilot signal extracting means (4) extracts the pilot signal contained in a signal outputted from said another hold means (2) and free from the pulse noise, thereby extracting the pilot signal contained in the received signal.

3. The noise removal device according to any of claims 1 or 2, wherein the main signal extracting means (6) is formed by a filter which allows the passing of the main signal,

4. The noise removal device according to any of claims 1 to 3, wherein the pilot signal extracting means (4) is formed by a filter having a narrow pass band allowing the passing of the pilot signal.

5. The noise removal device according to any one of claims 1 to 4, wherein the signal combining means (10) comprises:
changeover means (8) for selecting and outputting a signal outputted from the hold means (7) during the hold periods, and another signal outputted from the pilot signal removing means (5) during periods other than the hold periods; and
pilot signal adding means (9) for adding the pilot signal extracted by the pilot signal extracting means (4) into a signal outputted from the changeover means (8).

6. The noise removal device according to claim 5, wherein the pilot signal adding means (9) is an adder for adding together a signal outputted from the changeover means (8) and a pilot signal extracted by the pilot signal extracting means (4).

## Patentansprüche

1. Störungsentfernungsvorrichtung (1) zum Entfernen einer in ein Empfangsignal eingemischten Impulsstörung, wobei die Vorrichtung Folgendes aufweist:
eine Haltesteuereinrichtung (3) zum Detektieren von auftretenden Perioden der in das Empfangsignal eingemischten Impulsstörung und zum Bestimmen von Halteperioden, die mit den auftretenden Perioden der Impulsstörung übereinstimmen;
eine Pilotsignal-Extraktionseinrichtung (4) zum Extrahieren und Ausgeben eines in dem Empfangsignal enthaltenen Pilotsignals;
eine Pilotsignal-Entfernungseinrichtung (5) zum Entfernen des in dem Empfangsignal enthaltenen Pilotsignals und zum Ausgeben eines von dem Pilotsignal freien Signals;
eine Hauptsignal-Extraktionseinrichtung (6) zum Extrahieren und Ausgeben eines in dem Empfangsignal enthaltenen Hauptsignals;
eine Halteeinrichtung (7), um während der Halteperioden ein Signal zu halten, welches das von der Hauptsignal-Extraktionseinrichtung (6) ausgegebene Hauptsignal enthält, und um dieses Signal auszugeben; und
eine Signalverknüpfungseinrichtung (10) zum Verknüpfen des mit der Pilotsignal-Extraktionseinrichtung (4) extrahierten Pilotsignals mit einem Signal, das von der Halteeinrichtung während der Halteperioden ausgegeben wird, und mit einem anderen Signal, das von der Pilotsignal-Entfernungseinrichtung (5) während Perioden ausgegeben wird, die nicht Halteperioden sind, wodurch ein Ausgangssignal erzeugt wird.

2. Störungsentfernungsvorrichtung nach Anspruch 1, die ferner aufweist: eine weitere Halteeinrichtung (2) zum Halten des Empfangsignal während der Halteperioden, um ein von der Impulsstörung freies Signal auszugeben,
wobei die Pilotsignal-Extraktionseinrichtung (4) das Pilotsignal extrahiert, das in einem von der genannten weiteren Halteeinrichtung (2) ausgegebenen Signal enthalten und frei von der Impulsstörung ist, wodurch das in dem Empfangsignal enthaltene Pilotsignal extrahiert wird.

3. Störungsentfernungsvorrichtung nach einem der Ansprüche 1 oder 2, wobei die Hauptsignal-Extraktionseinrichtung (6) von einem Filter gebildet ist, das den Durchgang des Hauptsignals zulässt.

4. Störungsentfernungsvorrichtung nach einem der Ansprüche 1 bis 3, wobei die Pilotsignal-Extraktionseinrichtung (4) von einem Filter gebildet ist, das einen schmalen Bandpass hat, der den Durchgang des Pilotsignals zulässt.

5. Störungsentfernungsvorrichtung nach einem der Ansprüche 1 bis 4, wobei die Signalverknüpfungseinrichtung (10) Folgendes aufweist:
eine Umschalteinrichtung (8) zum Wählen und Ausgeben eines Signals, das von der Halteeinrichtung (7) während der Halteperioden ausgegeben wird, und eines anderen Signals, das von der Pilotsignal-Entfernungseinrichtung (5) während Perioden ausgegeben wird, die nicht die Halteperioden sind; und
eine Pilotsignal-Addiereinrichtung (9) zum Addieren des mit der Pilotsignal-Extraktionseinrichtung (4) extrahierten Pilotsignal zu einem von der Umschalteinrichtung (8) ausgegebenen Signal.

6. Störungsentfernungsvorrichtung nach Anspruch 5, wobei die Pilotsignal-Addiereinrichtung (9) ein Addierer zum Addieren eines von der Änderungseinrichtung (8) ausgegebenen Signals und eines mit der Pilotsignal-Extraktionseinrichtung (4) extrahierten Pilot-Signals ist.

## Revendications

1. Dispositif de suppression du bruit (1) destiné à supprimer un bruit d'impulsion mélangé dans un signal reçu, ledit dispositif comprenant :
un moyen de commande de maintien (3) destiné à détecter des périodes de survenance du bruit d'impulsion mélangé dans le signal reçu, et à choisir des périodes de maintien correspondant aux périodes de survenance de bruit d'impulsion ;
un moyen d'extraction de signal pilote (4) destiné à extraire et à transmettre un signal pilote contenu dans le signal reçu ;
un moyen de suppression de signal pilote (5) destiné à supprimer le signal pilote contenu dans le signal reçu et à transmettre un signal exempt du signal pilote ;
un moyen d'extraction de signal principal (6) destiné à extraire et à transmettre un signal principal contenu dans le signal reçu ;
un moyen de maintien (7) destiné à maintenir, pendant les périodes de maintien, un signal contenant le signal principal transmis par le moyen d'extraction de signal principal (6) et à transmettre ledit signal ; et
un moyen de combinaison de signal (10) destiné à combiner le signal pilote extrait par le moyen d'extraction de signal pilote (4), avec un signal transmis par le moyen de maintien pendant les périodes de maintien, et avec un autre signal transmis par le moyen de suppression de signal pilote (5) pendant des périodes autres que les périodes de maintien, produisant ainsi un signal de sortie.

2. Dispositif de suppression du bruit selon la revendication 1, comprenant en outre un autre moyen de maintien (2) destiné à maintenir le signal reçu pendant les périodes de maintien de façon à transmettre un signal exempt du bruit d'impulsion,
dans lequel le moyen d'extraction de signal pilote (4) extrait le signal pilote contenu dans un signal transmis par ledit autre moyen de maintien (2) et exempt du bruit d'impulsion, extrayant ainsi le signal pilote contenu dans le signal reçu.

3. Dispositif de suppression du bruit selon l'une quelconque des revendications 1 ou 2, dans lequel le moyen d'extraction de signal principal (6) est formé par un filtre qui permet le passage du signal principal.

4. Dispositif de suppression du bruit selon l'une quelconque des revendications 1 à 3, dans lequel le moyen d'extraction de signal pilote (4) est formé par un filtre possédant une bande passante étroite permettant le passage du signal pilote.

5. Dispositif de suppression du bruit selon l'une quelconque des revendications 1 à 4, dans lequel le moyen de combinaison de signal (10) comprend :
un moyen de changement (8) destiné à sélectionner et à transmettre un signal transmis par le moyen de maintien (7) pendant les périodes de maintien, et un autre signal transmis par le moyen de suppression de signal pilote (5) pendant des périodes autres que les périodes de maintien ; et
un moyen d'ajout de signal pilote (9) destiné à ajouter le signal pilote extrait par le moyen d'extraction de signal pilote (4) à un signal transmis par le moyen de changement (8).

6. Dispositif de suppression du bruit selon la revendication 5, dans lequel le moyen d'ajout de signal pilote (9) est un additionneur destiné à additionner ensemble un signal transmis par le moyen de changement (8) et un signal pilote extrait par le moyen d'extraction de signal pilote (4).
